# EUROPEAN PATENT APPLICATION

(11) **EP 1 249 435 A2**
(43) Date of publication of application: **16.10.2002**
(21) Application number: 02008048.7
(22) Date of filing: 10.04.2002
(51) Int. Cl.: C05F 17/02

(54) **Apparatus for storing and metering compostable materials or mixtures thereof**

(30) Priority: 12.04.2001 IT MI010804
(71) Applicant: Ionics Italba S.P.A., 20126 Milano (IT)
(72) Inventor: Greghi, Renzo, 20126 Milano (IT)
(74) Representative: Cicogna, Franco

(57) **Abstract**

An apparatus for storing and metering compostable materials or mixtures thereof, for biomass composting systems, comprises two mutually separated apparatus sections, of which a first section comprises a compostable material accumulating construction, and the second section comprises a metering construction, of a constant flow-rate type, for metering the stored materials.

## Description

### BACKGROUND OF THE INVENTION

The present invention relates to an apparatus for storing and metering compostable materials or matrixes or mixtures thereof, for biomass composting systems.

As is known, this composting systems are conventionally constituted by a plurality of sections, i.e. a receiving section, a pre-processing section, a bio-oxidating section, an ageing or maturing section, and a storing section for storing the finished product.

In particular, the processing sections require specifically designed feeding devices, such as high storing capability hoppers or bins, and constant flow-rate metering systems, designed for driving the biomasses during the processes operations performed thereon.

A main problem of prior systems is that they have a poor operating reliability, mainly due to the non homogeneous physical characteristics of the materials being processed, such as specific gravity, particle size, moisture content, presence of inert materials, such as pads, glass residues, and so on, which cannot be composted.

Thus, the lacking of proper devices for efficiently storing great amounts of different materials and metering them with a constant flow-rate, constitutes a limitation for all the processing sections.

A further drawback affecting the prior art composting systems is the formation of a "bridge" in the accumulating hoppers, where a "tunnel effect" occurs, including the formation of a cavity inside the biomass being processed, preventing any contacts of the latter with the withdrawing systems, thereby causing the withdrawing system to inefficiently operate and stopping the feeding operation.

Under such a condition, in order to recover the functionality of the overall system, it is necessary to perform manual operations.

Another drawback of prior art composting systems is a possible locking or stop of the metering system thereof, due to the physical characteristics of the materials being processed.

Actually, none prior art system is adapted to assure a constant or even metering of different compostable materials, which conventionally comprise crushed or milled cellulose wood material, organic material coming from a differentiated collection, different mixtures of lignocellulosic and organic materials, already subjected to different processing stages, compostable materials with a great moisture contents and in an unrefined condition.

Moreover, prior art systems or devices for processing compostable materials, provide to limit the material flow-rate at the outlet of the hopper, i.e. to limit the height of the material layer, based on the action of layer laminating rotary drums or, alternatively, processing reels having their rotary axes horizontally directed or vertically directed, or also slanted, to provide a counter-force against the biomass to be withdrawn, thereby impelling the materials to be laminated in order to be fed to the outlet therefor.

Such an action is affected by several drawbacks, thereamongst the most serious are the following:
- a possible easy jamming of the plastics material and mono and bidimensional materials on the rotary elements of the system provided for limiting the material layer;
- a comparatively high working torque;
- the impossibility of operating on crushed lignocellulosic waste materials, or their mixtures with other organic materials, because of the resilient properties of these materials which, due to the high volume to be processed, prevents the processing drums or reels from performing their proper laminating operations.

In order to overcome the above mentioned drawbacks, as "metering devices" are usually used the same driving means provided for driving the biomass being processed, such as, for example, the so-called "rubberized blades", i.e. scraping devices.

In particular, the material to be fed to the processing operations is "metered", with a constant material flow-rate, in the system supplying or feeding means, by progressing turning over the rubberized blade assembly.

Such an use of the above mentioned rubberized blades solves the constant flow rate feeding problems of the composting systems, but negatively affects the operating cost thereof, with a consequent useless waste of the sources.

Moreover, the biomass processing system technique, limited by the serious drawbacks due to the loading and metering constant flow-rate systems, encounters great difficult in its upgrading.

Furthermore, in prior art composting systems, the poor automatization of the processing systems requires frequent manual controls, with a great labour involvement which further increases the operating costs.

### SUMMARY OF THE INVENTION

Accordingly, the aim of the present invention is to overcome the above mentioned problems, by providing a composting system having a high storing capability, for storing the compostable materials being processed, and moreover adapted to provide a constant flow-rate metering of said compostable materials.

Within the scope of the above mentioned aim, a main object of the present invention is to provide such an apparatus for accumulating or storing and metering compostable biomasses which, owing to its specifically designed features, is very reliable in operation and, moreover, is adapted to process a lot of different compostable materials.

Another object of the present invention is to provide such an apparatus, for composting systems, adapted to automatically perform all the compostable material processing steps, in a very flexible operating manner.

Yet another object of the present invention is to provide such an apparatus for storing and metering biomasses which can be easily made starting from easily available elements and materials.

The above mentioned aim and objects, as well as yet other objects, which will become more apparent hereinafter, are achieved by an apparatus for storing and metering compostable materials or mixtures thereof, for biomass composting systems, characterized in that said apparatus comprises two mutually separated apparatus sections, of which a first section comprises a compostable material accumulating construction and the second apparatus section comprises a constant flow-rate metering construction for metering the stored compostable materials.

### BRIEF DESCRIPTION OF THE DRAWINGS

Further characteristics and advantages of the present invention will become more apparent hereinafter from the following detailed disclosure of the preferred, though not exclusive, embodiment of the invention, which is illustrated, by way of an indicative, but not limitative, example, in the accompanying drawings, where:

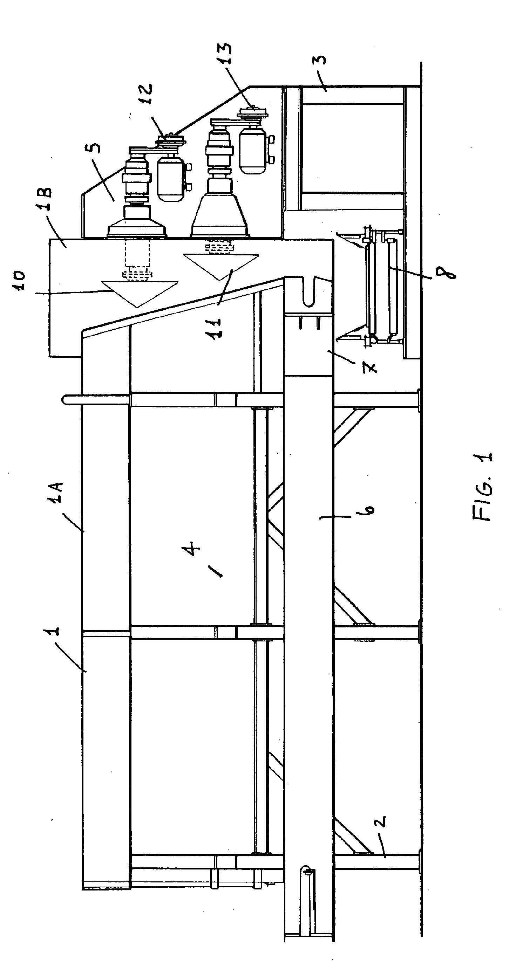

Figure 1 is a cross-sectional view of the subject apparatus and related driving or controlling devices;
Figure 2 is a top plan view of the composting apparatus according to the present invention;

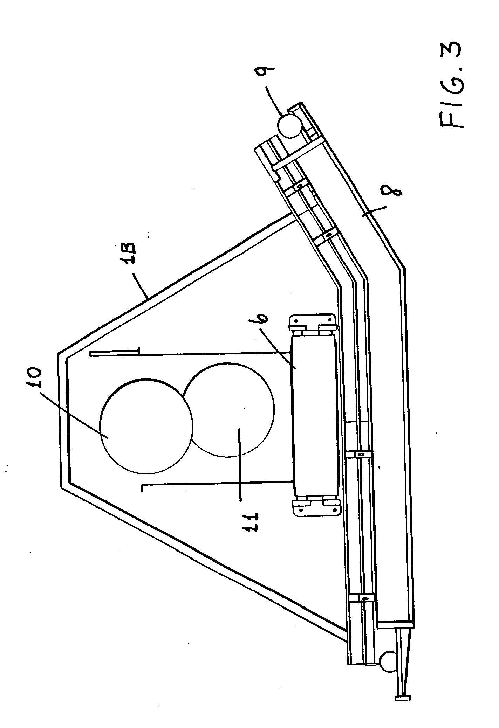

Figure 3 is a front view of the metering device included in the subject apparatus;
   and
Figure 4 is a cross-sectional view of the subject apparatus, substantially taken along the line IV-IV of figure 2.

### DESCRIPTION OF THE PREFERRED EMBODIMENTS

With reference to the number references of the above mentioned figures, the apparatus for accumulating and storing, with a constant flow-rate, different compostable materials, according to the present invention, and which has been generally indicated by the reference number 1 is designed for accumulating and storing and metering different compostable materials such as crushed lignocellulosic materials, organic materials coming from a differentiated collection, different mixtures of lignocellulosic and organic materials, compost materials with high moisture contents, in an unrefined condition, and comprises two apparatus sections, i.e. an accumulating section 1A and a metering section 1B, said sections being separated from one another.

The section 1A comprises an accumulating construction 2, including an accumulating portion 4, and a first conveyor belt 6, whereas the second section 1B comprises a metering construction 3, including a metering portion 5 and a second conveyor belt 8.

The constructions 2 and 3 are made of a strong steel sheet metal material, with bolted crossmembers.

The accumulating portion 4 is also made of a strong sheet metal material, with cross members bolted to its sidewalls.

A technical feature, used for making the accumulating section 1A, to prevent "bridges" from being formed and accordingly to fit said accumulating section to different processing conditions and features of the materials to be stored, is the selection of a downward diverging configuration, as shown, on a different scale, in figure 4.

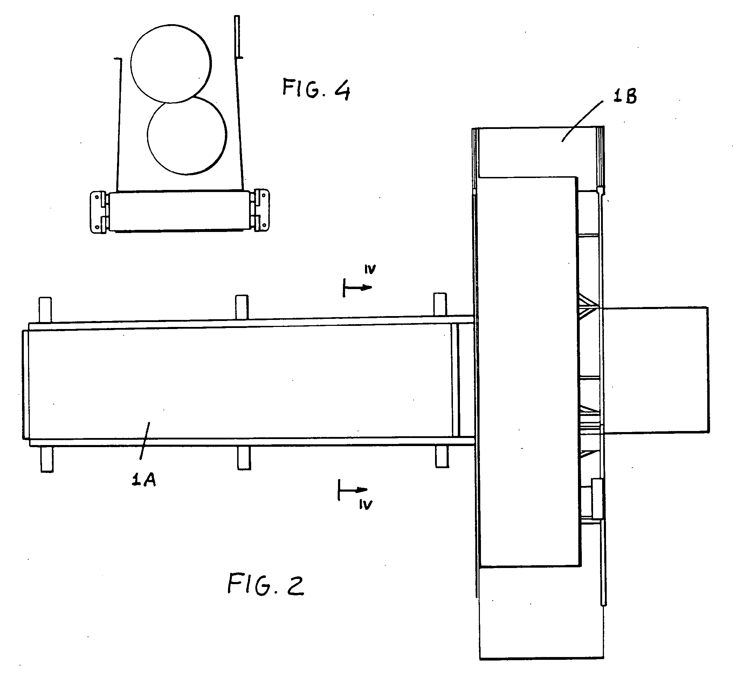

A further technical feature used for designing the accumulating section 1A, in order to prevent the materials being fed from stopping or jamming, and to properly allow said materials to be supplied to the outlet of the apparatus, is the selection for said accumulating section with a configuration diverging toward the outlet thereof, as is shown, not to scale, on the top plan view of figure 2.

The accumulating section 1A further comprises a conveyor belt 6 and a driving assembly 7.

The metering portion 5 is made of a strong sheet metal material, fixed by bolts to the framework 3.

The metering portion 5 comprises two conic milling discs 10 and 11, driven by driving means which have been respectively indicated by the reference numbers 12 and 13.

For each of the driving means, indicated by the reference numbers 7, 9, 12 and 13, and comprising an electric motor, is provided a rpm changing device 20 in order to mate or fit the processing speed to the compostable materials being processed.

The electric control panel for controlling the electric motors, indicated by the reference number 9, comprises, in addition to the driving means 20, a logic programmable control unit, of a per se known type, PLC.

Said logic programmable control unit, based on set parameters corresponding to operating searches, will provide, at the output thereof, control signals for controlling the mentioned motors 7, 9, 12 and 13 through rotary frequency changing devices 20.

The metering device is based, instead of the laminating action, on a centrifugal force to which the material in the processing hopper is subjected as it is fed to the outlet of the apparatus.

In fact, the rotary disc, including disgregating devices, arranged at the outlet mouth of the hopper, causes the material, being fed with a motion parallel to the disc rotary axis, to be subjected to a centrifugal type of movement.

Thus, at the outlet, the material will be distributed according to a material flow having a direction perpendicular to the rotary axis of the disc.

This mechanisms will favor both an outlet controlled flow and a disgregating of the lignocellulosic residue materials.

This operation will provide a lot of positive results with respect to the status of the prior art: in fact, it drastically reduce the possibility of jammings of the plastics material and mono and bidimensional materials on the rotary element of the apparatus and, the productivity of yield being the same, requires greatly reduced working torques.

Moreover, it allows to operate with lignocellulosic crushed materials, or mixtures thereof or with other organic materials, without any problems, even if the volume of the materials to be processed in the processing hopper exceeds given values.

The present invention, moreover, allows to provide a proper control of the optimum processing flow-rate, while greatly reducing the stop time due to possible jammings.

The fact that the subject apparatus comprises two separated sections provides two great advantages, the first of constructional nature, the second of operating nature.

The first advantage is that the accumulating section outlet, since it is free of any metering systems and related construction for supporting it, does not hinder the feeding material during the withdrawing operation thereof.

The second advantage is that the position of the milling discs with respect to the material outlet can be easily modified, by moving the section 1A toward or away from the section 1B, both for performing maintenance operations, and for modifying the flow-rate parameters depending on the different physical characteristics of the stored materials.

It has been found that the invention fully achieves the intended aim and objects.

In particular, the subject apparatus can be easily fitted to all the mixtures of compostable materials, while providing a great reduction of the operating cost.

In practicing the invention, the used materials, and their contingent size and shapes, can be any depending on requirements and the status of the art.

Moreover, all the constructional details can be replaced by other technically equivalent elements.

Furthermore, the apparatus for storing and metering crushed lignocellulosic materials or mixtures thereof with other organic materials can be subjected to further modifications and variations coming within the scope of the invention.

## Claims

1. An apparatus for storing and metering compostable materials or mixtures thereof, for biomass composting systems, **characterized in that** said apparatus comprises two apparatus sections, separated from one another, of which a first apparatus section comprises a compostable material accumulating construction and the second apparatus section comprises a constant flow-rate metering construction, for metering the stored compostable materials.

2. An apparatus, according to Claim 1, **characterized in that** said metering construction comprises a metering portion including two conic milling discs driven by driving means.

3. An apparatus, according to Claim 1 or 2, **characterized in that** said accumulating construction comprises an accumulating portion and a first conveyor belt driven by first conveyor belt driving means.

4. An apparatus, according to one or more of the preceding claims, **characterized in that** said metering construction comprises a second conveyor belt, driven by second conveyor belt driving means.

5. An apparatus, according to one or more of the preceding claims, **characterized in that** said first driving means comprise electric motors each of which comprises a rpm changing device.

6. An apparatus, according to one or more of the preceding claims, **characterized in that** said first and second driving means are coupled to a programmable logic control unit.

7. An apparatus, according to one or more of the preceding claims, **characterized in that** said accumulation portion has a downward diverging configuration.

8. An apparatus, according to one or more of the preceding claims, **characterized in that** the positions of said milling discs cam be modified with respect to the compostable material outlet by driving the accumulating section toward or away from the metering section both for performing maintenance operations and for modifying the compostable material flow-rate parameters depending on the physical characteristics of the stored compostable materials.

9. An apparatus, according to one or more of the preceding claims, **characterized in that** said apparatus comprises one or more of the disclosed and/or illustrated characteristics.
